# NEUE EUROPÄISCHE PATENTSCHRIFT

(11) **EP 3 365 166 B2**
(45) Veröffentlichungstag und Bekanntmachung des Hinweises auf die Entscheidung über den Einspruch: **16.08.2023**
(45) Hinweis auf die Patenterteilung: 29.05.2019
(21) Anmeldenummer: 16784914.0
(22) Anmeldetag: 21.10.2016
(51) Int. Cl.: B32B 5/02, B32B 25/14, B32B 27/30, B32B 27/32, B32B 27/38, B32B 27/40, B32B 37/02, B32B 25/08, B32B 25/10, B32B 27/12

(54) **MEHRSCHICHTIGES VERBUNDBAUTEIL**
MULTILAYER COMPOSITE COMPONENT
ÉLÉMENT COMPOSITE STRATIFIÉ

(30) Priorität: 22.10.2015 DE 102015220672; 19.07.2016 DE 102016213206
(43) Veröffentlichungstag der Anmeldung: 29.08.2018
(73) Patentinhaber: Wobben Properties GmbH, 26607 Aurich (DE)
(72) Erfinder: KUHN, Marvin, 26180 Rastede (DE); RAHMANN, Uwe, 26629 Großefehn (DE); BÄRTL, Christina, 26603 Aurich (DE); VINKE, Daniel, 26607 Aurich (DE)
(74) Vertreter: Eisenführ Speiser
(86) Internationale Anmeldenummer: PCT/EP2016/075448
(87) Internationale Veröffentlichungsnummer: WO 2017/068152

(56) Entgegenhaltungen:
- WO-A1-2015/028250
- WO-A2-2013/045114
- DE-U1-202009 006 966

## Beschreibung

Die vorliegende Erfindung betrifft ein Verbundbauteil, die Verwendung eines erfindungsgemäßen Verbundbauteils, ein Windrad für eine Windenergieanlage und ein Verfahren zur Herstellung eines Verbundbauteils.

Rotorblätter für Windenergieanlagen sind seit langem bekannt und beispielsweise beschrieben in der DE 10 2004 007 487 A1 und DE 10 319 246 A1. Sie sind in ihrem Betrieb durch Winddruck, Erosion, Temperaturschwankungen, UV-Einstrahlung sowie durch Niederschläge hohen Belastungen ausgesetzt. Insbesondere an Standorten mit tropischem Klima, die sich durch stark wechselnde Witterungseinflüsse und eine hohe Luftfeuchtigkeit auszeichnen, wie beispielsweise Brasilien oder Taiwan, aber auch in Deutschland neigen Rotorblätter zu Erosion.

Bei Blattspitzengeschwindigkeiten bis zu 300 km/h wirken Sandkörner, Salzpartikel, Regentropfen, Insekten oder andere Schwebeteile in der Luft abrasiv. Besonders im vorderen Kantenbereich wird die Oberfläche von Rotorblättern hierdurch stark belastet und an diesen Stellen kommt es zu einem Abtrag der Rotoroberfläche und damit zu einem Verlust an Aerodynamik und Stabilität. Um die Blattspitzenerosion und den damit verbundenen Wartungs- und Reparaturaufwand zu verringern, kann die maximale Drehzahl der Anlage limitiert werden, was allerdings zu einer geringeren Leistung führt. Es ist daher sinnvoll, die Erosionsbeständigkeit von Rotorblättern zu verbessern.

Gleichzeitig sollen die Rotorblätter jedoch möglichst leicht sein, um die auf eine eventuell vorhandene Rotorblattnabe sowie die zugehörigen Lager und den Turm der Windenergieanlage einwirkenden Biegelasten gering zu halten.

Üblicherweise werden Rotorblätter und Rotorblattelemente in einem Formungsverfahren hergestellt, bei dem Fasermaterialien und/oder Kernwerkstoffe, insbesondere Balsaholz, in eine Rotorblattelementform eingelegt und mit einem aushärtenden Harz zum Bilden eines belastbaren Verbundmaterials beaufschlagt werden. Als Harz werden bei der Herstellung von Rotorblättern bzw. Rotorblattelementen häufig Epoxidharze eingesetzt. Diese sind gut geeignet für den Aufbau der Basis eines Rotorblattes oder Rotorblattelementes aus Fasermaterial und Harz.

Zum Schutz der Rotorblätter bzw. der Rotorblattelemente gegen Witterungseinflüsse und insbesondere gegen Erosion ist versucht worden, eine Oberflächenschicht mit einem Gelcoat-Verfahren einzusetzen, wie in der DE 10 344 379 A1 beschrieben. Nachteilig dabei ist, dass bei einem solchen Verfahren eine Mindestverarbeitungszeit eingehalten werden muss, bis die Gelcoat-Mischung soweit ausreagiert ist, dass sie mit Fasermaterial belegt werden kann. Dies führt zu einer unerwünschten Verlangsamung des Herstellungsverfahrens eines Rotorblattes oder Rotorblattelementes. Darüber hinaus ist es nicht möglich, beim Gelcoat-Verfahren die Herstellung eines Rotorblattelementes bzw. Rotorblattes beliebig zu unterbrechen, um eine Verbindung zwischen Gelcoat-Oberflächenschicht und Infusionsharz zu ermöglichen.

Des Weiteren ist versucht worden, Oberflächenfolien auf das Rotorblatt oder das Rotorblattelement aufzukleben oder anderweitig nachträglich am Rotorblatt oder Rotorblattelement gegebenenfalls lösbar zu befestigen. Beispielsweise werden Polyurethan-Folien auf Rotorblätter aufgeklebt. Eine weitere Möglichkeit aus dem Stand der Technik ist gemäß DE 10 2009 002 501 A1 die Herstellung eines vernetzten Verbundes aus Oberflächenfolie und Infusionsharz. Auch dieses Verfahren ist insbesondere mit Polyurethan-Folien möglich. Polyurethan verfügt über eine hohe Abriebbeständigkeit. Es ist jedoch wünschenswert, die Abriebfestigkeit von Rotorblättern bzw. Rotorblattelementen noch weiter zu verbessern.

In der DE 10 2013 217 128 A1 wird ein Rotorblattelement für eine Windenergieanlage beschrieben, die eine Oberflächenfolie aus Polyethylen mit ultrahohem Molekulargewicht (UHMW-PE) aufweist. UHMW-PE zeichnet sich durch sehr gute Verschleiß- und Abriebfestigkeiten auch bei abrasiven Medien aus. Seine Abriebfestigkeit ist sechsfach höher als die von Polyurethan. Daneben verfügt UHMW-PE über exzellente chemische Beständigkeit sowie einen niedrigen Reibungskoeffizienten, eine hervorragende Dimensionsstabilität und eine hohe Schlagfestigkeit auch bei niedrigen Temperaturen. Allerdings lässt sich UHMW-PE nur sehr schlecht mit herkömmlichen Klebstoffen verkleben und haftet insbesondere nicht an Harzen, wie beispielsweise Epoxidharzen. In dem in der DE 10 2013 217 128 A1 beschriebenen Verfahren wird die Polyethylenfolie daher mittels zwei Anbindungsschichten aus Gummi mit einer darunterliegenden Basis aus einem mit härtbarem Harz getränktem Fasermaterial verbunden. Bei dem beschriebenen Verfahren sind insgesamt drei Härte- bzw. Vulkanisierungsschritte notwendig, um ein Rotorblattelement zu beschichten.

Das in der WO 2010/118860 beschriebene Kunststoff-Verbundbauteil besteht aus einem wärmehärtenden Kunstharz als Außenschicht, einer Elastomeren-Schicht und einer Metall- und/oder Kunststoff-Trägerschicht. Die Schichten werden in einem einzigen Arbeitsgang unter Wärmebehandlung oder unter Bestrahlung mit UV-Licht zusammengefügt. Neben anderen Anwendungsgebieten wird in der WO 2010/118860 auch die Verwendung des Kunststoff-Verbundbauteils in Rotorblättern von Hubschraubern oder Windrädern beschrieben.

Aufgabe der vorliegenden Erfindung war es, ein Bauteil, insbesondere ein Rotorblatt, zur Verfügung zu stellen, das sich durch eine sehr hohe Verschleiß- und Abriebfestigkeit auszeichnet und gleichzeitig bei der Herstellung wenig Zeit und geringe Temperaturen benötigt.

Diese Aufgabe wird durch ein Verbundbauteil (10) gelöst, das durch folgenden Schichtenaufbau gekennzeichnet ist
a) eine Schicht (11), die zumindest teilweise aus Polyethylen besteht,
b) eine Schicht (12), die zumindest teilweise aus einem Polyurethan und/oder Elastomer besteht,
c) wenigstens eine Schicht (13), die zumindest teilweise aus einem mittels Fasern (14) verstärkten Kunststoff besteht, oder die zumindest teilweise aus einem Klebstoff besteht, wobei die Schicht (13) ein Epoxidharz-Klebstoff ist oder diesen umfasst oder ein Polyurethan-Klebstoff ist oder diesen umfasst
wobei die Schicht (12) unmittelbar zwischen der Schicht (11) und der Schicht (13) angeordnet ist,
wobei die Schichten (11) und (12) in einem ersten Arbeitsgang zu einem Laminatverbund gefügt wurden und die Schicht (13) in einem zweiten Arbeitsgang an den die Schichten (11) und (12) umfassenden Laminatverbund gefügt wurden.

Im Zusammenhang mit der Schicht (12) bedeutet die Formulierung, dass die Schicht zumindest teilweise aus einem "Polyurethan und einem Elastomer besteht", dass es sich bei dem bezeichneten Material auch um ein Polyurethan-Elastomer handelt. Die Formulierung "Polyurethan oder Elastomer" bedeutet, dass entweder ein nicht-elastomeres Polyurethan oder ein Elastomer gemeint ist, das kein Urethan-Elastomer ist. Bevorzugtes Polyurethan ist in dem hiesigen Zusammenhang ein thermoplastisches Polyurethan.

Vorteilhaft bei der Ausgestaltung der erfindungsgemäßen Erfindung ist, dass der die Schichten (11) und (12) umfassende Laminatverbund bereits vollständig ausgehärtet ist und nicht noch weiter durch Wärmeeinwirkung ausgehärtet werden muss. Somit kann bei der erfindungsgemäßen Ausgestaltung die zum Zusammenfügen benötigte Temperatur niedriger gehalten werden, als dies der Fall wäre, wenn die Polyurethanschicht (12) oder die Elastomerschicht (12) ebenfalls ausgehärtet werden müsste. Hierdurch wird als wesentlicher Vorteil eine Vereinfachung und Beschleunigung des Zusammenfügens erreicht. Im Vergleich zu einem Schichtaufbau, bei dem die Polyurethanschicht (12) oder die Elastomerschicht (12) gleichzeitig mit der Schicht (13) ausgehärtet wird und hierbei für beide Aushärtevorgänge gleiche Temperaturen angewendet werden, wird die Haftung der einzelnen Schichten erhöht.

Ohne sich hierdurch auf eine spezielle Theorie festlegen zu wollen, wurde in eigenen Untersuchungen erkannt, dass für das Aushärten von einzelnen Schichten ein idealer Temperaturbereich vorliegt. Sofern die Temperaturen höher sind als erforderlich, kann dies einen negativen Einfluss auf die resultierende Schicht aufweisen, da unerwünschte Nebenreaktionen die beim Aushärten stattfindende Polymerisationsreaktion hindern. Zudem können bei zu hohen Temperaturen auch unerwünschte Quervernetzungsreaktionen statt finden, die die Eigenschaften der resultierenden Schicht beeinflussen. Bei viel zu hohen Temperaturen kann auch eine Versprödung oder Zersetzung der Schicht erfolgen. Bei zu geringen Temperaturen verläuft die Aushärtung bzw. Polymerisation der Schicht nicht oder nicht vollständig. Sofern beide Schichten gleichzeitig ausgehärtet werden, wird zumindest eine Schicht hiervon zwangsläufig nicht in dem für diese Schicht idealem Temperaturbereich ausgehärtet. Sofern zwei Schichten gleichzeitig ausgehärtet werden sollten und hierbei eine erste Schicht bei niedrigen Temperaturen aushärtet, während die zweite Schicht bei höheren Temperaturen aushärtet, wurde in der Praxis die Aushärtung bisher bei der höheren Temperatur durchgeführt, da vermieden werden soll, dass die zweite auszuhärtenden Schichten nicht oder nicht vollständig aushärtet. Hierbei wurde in Kauf genommen, dass die erste Schicht zu Stark thermisch beansprucht wird und die zu hohe Temperatur einen negativen Einfluss auf die Polymerisation und die resultierende Schicht aufweisen kann.

Entsprechend wurde erkannt, dass die einzelnen Schichten des Verbundbauteils (10) und somit das gesamte Verbundbauteil (10) bessere Eigenschaften aufweist, wenn die Schichten (11) und (12) in einem ersten Arbeitsgang zu einem Laminatverbund gefügt wurden und die Schicht (13) in einem zweiten Arbeitsgang an den die Schichten (11) und (12) umfassenden Laminatverbund gefügt wurden. Überraschenderweise hat sich gezeigt, dass hierdurch nicht nur die Eigenschaften der einzelnen Schichten sondern auch die Haftung der einzelnen Schichten untereinander erhöht wird.

In einer bevorzugten Ausgestaltung der vorliegenden Erfindung handelt es sich bei dem Polyethylen um ein High Molecular Polyethylen (HMW-PE), ein Ultra High Molecular Polyethylen (UHMW-PE) oder Polytetrafluorethylen (PTFE), vorzugsweise um ein Ultra High Molecular Polyethylen (UHMW-PE).

Insbesondere das Ultra High Molecular Polyethylen (UHMW-PE) zeichnet sich durch sehr gute Verschleiß- und Abriebfestigkeiten auch bei abrasiven Medien aus. In eigenen Untersuchungen hat sich gezeigt, dass durch die Verwendung einer Schicht (11), die zumindest teilweise aus UHMW-PE besteht, im erfindungsgemäßen Verbundbauteil die Verschleiß- und Abriebfestigkeit des Verbundbauteils, insbesondere von Rotorblättern, signifikant verbessert werden kann.

Unter einem High Molecular Polyethylen (HMW-PE) wird im Rahmen der vorliegenden Erfindung ein hochmolekulares Polyethylen mit einer mittleren Molmasse von 500 bis 1000 kg/mol verstanden. Unter einem Ultra High Molecular Polyethylen (UHMW-PE) wird im Rahmen der vorliegenden Erfindung ein ultrahochmolekulares Polyethylen mit einer mittleren Molmasse von über 1000 kg/mol verstanden. Im Rahmen der vorliegenden Erfindung ist es bevorzugt, wenn das eingesetzte UHMW-PE eine mittlere Molmasse zwischen 1000 kg/mol bis 10000 kg/mol aufweist, besonders bevorzugt eine mittlere Molmasse zwischen 1000 kg/mol und 5000 kg/mol, insbesondere bevorzugt zwischen 3000 kg/mol und 5000 kg/mol. Die Bestimmung der mittleren Molmasse erfolgt rechnerisch mittels Margolies-Gleichung. Bei dem eingesetzten Polyethylen kann es sich um ein lineares oder ein vernetztes Polyethylen handeln.

Das eingesetzte ultrahochmolekulare Polyethylen hat vorzugsweise eine Dichte von 0,93 bis 0,94 g/cm³.

In einer bevorzugten Ausgestaltung der vorliegenden Erfindung enthält die Schicht (11) zusätzlich einen UV-Stabilisator, der das Polyethylen gegen Alterung durch ultraviolettes Licht schützt. Als UV-Stabilisatoren sind organische und anorganische UV-Absorber bevorzugt, insbesondere ausgewählt aus der Liste umfassend Benzophenone, Benzotriazole, Oxalanilide, Phenyltriazine, Ruß, Titandioxid, Eisenoxidpigmente und Zinkoxid oder 2,2,6,6-Tetramethylpiperidin-Derivate wie Bis(2,2,6,6-tetramethyl-4-piperidyl)sebacat ("Hindered amine light stabilizer (HALS)").

Durch die Anwesenheit eines UV-Stabilisators kann die Langzeitbeständigkeit gegenüber UV-Licht erhöht werden.

Besonders bevorzugt ist es, wenn die Schicht (11), die zumindest teilweise aus Polyethylen besteht, überwiegend aus Polyethylen besteht, insbesondere zu mehr als 50 Gew.-%, bevorzugt zu mehr als 80 Gew.-%, besonders bevorzugt zu mehr als 95 Gew.-% aus Polyethylen besteht, insbesondere aus Ultra High Molecular Polyethylen (UHMW-PE), bezogen auf das Gesamtgewicht der Schicht.

Unter einem Polyurethan wird im Rahmen dieser Erfindung ein Polyadditionsprodukt aus zumindest Dialkoholen (Diolen) beziehungsweise Polyolen (z. B. langkettigen Diolen) mit Polyisocyanaten unter Ausbildung von Urethan-Gruppen (-NH-CO-O-) verstanden.

Es ist bevorzugt, dass das Elastomer ein Ethylen-Propylen-Kautschuk (EPM), Ethylen-Propylen-Dien-Kautschuk (EPDM), Ethylen-Acrylat-Kautschuk (EAM), Fluorkarbon-Kautschuk (FKM), Acrylat-Kautschuk (ACM) oder Acrylnitril-Butadien-Kautschuk (NBR) ist, vorzugsweise ein Ethylen-Propylen-Dien-Kautschuk (EPDM) ist.

In eigenen Untersuchungen hat es sich gezeigt, dass Polyurethane und Elastomere (insbesondere die bevorzugten) eine besonders gute Bindung zwischen der Schicht (11), die zumindest teilweise aus Polyethylen besteht, und der Schicht (13) bewirken. Dabei hat sich überraschenderweise gezeigt, dass Polyurethan sowie Ethylen-Propylen-Dien-Kautschuk (EPDM) besonders gute Hafteigenschaften aufweisen, wenn es sich bei dem Polyethylen der Schicht (11) um Ultra High Molecular Polyethylen (UHMW-PE) und bei der Schicht (13) um eine zumindest teilweise aus einem mittels Fasern (14) verstärkten Kunststoff handelt.

In einer bevorzugten Ausgestaltung der vorliegenden Erfindung handelt es sich bei dem Polyurethan um ein thermoplastisches Polyurethan.

Unter einem thermoplastischen Polyurethan wird im Rahmen dieser Erfindung ein Polyurethan verstanden, das sich in einem bestimmten Temperaturbereich (thermoplastisch) reversibel verformen lässt. Von thermoplastischen Polyurethanen sind insbesondere duroplastische Polyurethane abzugrenzen, welche nach ihrer Aushärtung nicht mehr thermoplastisch verformt werden können.

In einer bevorzugten Ausgestaltung der vorliegenden Erfindung handelt es sich bei dem Polyurethan um ein Polyurethan-Elastomer.

Unter einem Polyurethan-Elastomer wird im Rahmen dieser Erfindung ein Polyurethan verstanden, das elastisch verformbar ist und vorzugsweise eine Glasübergangstemperatur (Tg) (ermittelt mittels Differential Scanning Calorimetry (DSC) mit einer Heizrate von 10 K/min) von maximal 20°C aufweisen.

Es ist erfindungsgemäß bevorzugt, wenn das Polyurethan-Elastomer eine Glasübergangstemperatur T_{g} zwischen -5°C und -45°C aufweist (ermittelt mittels Differential Scanning Calorimetry (DSC) mit einer Heizrate von 10 K/min).

Es ist erfindungsgemäß bevorzugt, wenn das Polyurethan-Elastomer eine Shore A-Härte gemäß DIN ISO 7619-1 von maximal 95, vorzugsweise von maximal 85, weiter bevorzugt von maximal 75 aufweist.

Es ist erfindungsgemäß bevorzugt, wenn das Polyurethan-Elastomer eine Shore A-Härte gemäß DIN ISO 7619-1 von mehr als 40, vorzugsweise mehr als 50, weiter bevorzugt mehr als 60 aufweist.

Es ist erfindungsgemäß bevorzugt, wenn das Polyurethan-Elastomer eine Shore A-Härte gemäß DIN ISO 7619-1 im Bereich von 40 bis 95, vorzugsweise im Bereich von 50 bis 85, weiter bevorzugt im Bereich von 60 bis 75 aufweist.

Überraschenderweise hat sich gezeigt, dass thermoplastische Polyurethan-Elastomere mit den oben genannten Shore A-Härte-Werten bzw.-Bereichen (gemäß DIN ISO 7619-1) besonders gute Eigenschaften bei der erfindungsgemäßen Verwendung des Kunststoff-Verbundbauteils in Rotorblättern von Hubschraubern oder Windrädern aufweisen.

Es ist erfindungsgemäß bevorzugt, wenn das thermoplastische Polyurethan ein Kondensationsprodukt aus einem Polyol (langkettigem Diol) (vorzugsweise ein Polyesterdiol oder Polyetherdiol), einem Diisocyanat und einem kurzkettigen Diol ist. Im Rahmen dieser Erfindung wird unter einem kurzkettigen Diol ein Diol mit einem Molekulargewicht von unter 500 g/mol verstanden und unter einem langkettigen Diol ein Diol mit einem Molekulargewicht von 500 g/mol oder mehr, vorzugsweise bis 8.000 g/mol, verstanden.

Überraschenderweise hat sich gezeigt, dass sich die Kombination aus Polyurethan (vorzugsweise thermoplastisches Polyurethan und/oder Polyurethan-Elastomer) in der Schicht (12) und Ultra High Molecular Polyethylen (UHMW-PE) in der Schicht (11) durch besonders gute Erosionseigenschaften auszeichnet. Die Polyurethan-Elastomer Schicht (12) wirkt haftvermittelnd während die äußere UHMW-PE-Schicht (11) sehr erosionsbeständig ist. Diese Kombination aus Polyurethan (vorzugsweise thermoplastisches Polyurethan und/oder Polyurethan-Elastomer) in der Schicht (12) und Ultra High Molecular Polyethylen (UHMW-PE) in der Schicht (11) weist bei ausgezeichneter Haftung an zumindest teilweise mittels Fasern (14) verstärkten Kunststoffen Verschleiß- und Abriebfestigkeiten auf, die mit anderen Kombinationen aus Polymeren und Polyethylenen bisher nicht erreicht werden konnten. Es hat sich gezeigt, dass die Kombination aus Polyurethan (vorzugsweise thermoplastisches Polyurethan und/oder Polyurethan-Elastomer) in der Schicht (12) und Ultra High Molecular Polyethylen (UHMW-PE) in der Schicht (11) einen synergistischen Effekt aufweist, da sich die kombinierte positive Wirkung der einzelnen Schichten potenziert.

Überraschenderweise hat sich auch gezeigt, dass sich die Kombination aus Ethylen-Propylen-Dien-Kautschuk (EPDM) in der Schicht (12) und Ultra High Molecular Polyethylen (UHMW-PE) in der Schicht (11) ebenfalls durch besonders gute Erosionseigenschaften auszeichnet. Diese Kombination aus Ethylen-Propylen-Dien-Kautschuk (EPDM) in der Schicht (12) und Ultra High Molecular Polyethylen (UHMW-PE) in der Schicht (11) weist bei ausgezeichneter Haftung an zumindest teilweise mittels Fasern (14) verstärkten Kunststoffen Verschleiß- und Abriebfestigkeiten auf, die mit anderen Kombinationen aus Elastomeren und Polyethylenen bisher nicht erreicht werden konnten. Es hat sich gezeigt, dass die Kombination aus Ethylen-Propylen-Dien-Kautschuk (EPDM) in der Schicht (12) und Ultra High Molecular Polyethylen (UHMW-PE) in der Schicht (11) einen synergistischen Effekt aufweist, da sich die kombinierte positive Wirkung der einzelnen Schichten potenziert.

Erfindungsgemäß ist die Schicht (12) unmittelbar zwischen der Schicht (11) und der Schicht (13) angeordnet und es liegen keine weiteren (Polymer-)Schichten zwischen der Schicht (11) und der Schicht (13). Durch diesen Aufbau lässt sich - neben weiteren Vorteilen - die Anzahl der Grenzschichten minimieren und es wird eine verbesserte Haftung der Schichten erhalten. Im Querschnitt lassen sich erfindungsgemäße Verbundbauteile mit nur einer Schicht (12) von anderen Verbundbauteilen unterscheiden, die mehrere (Polymer-)Schichten enthalten. Ebenfalls lassen sich erfindungsgemäße Verbundbauteile von nicht erfindungsgemäßen Bauteilen unterscheiden, bei denen nicht zuerst ein Laminatverbund aus den Schichten (11) und (12) und in einem weiteren zweiten Arbeitsgang die Schicht (13) in einem an den die Schichten (11) und (12) umfassenden Laminatverbund gefügt wurden. Dies ist insbesondere durch Betrachtung der Grenzschichten möglich, insbesondere der Grenzschicht zwischen den Schichten (12) und (13).

Besonders bevorzugt ist es, wenn die Schicht (12), die zumindest teilweise aus einem Polyurethan (vorzugsweise thermoplastischen Polyurethan und/oder Polyurethan-Elastomer) besteht, überwiegend aus Polyurethan besteht, insbesondere zu mehr als 50 Gew.-%, bevorzugt zu mehr als 80 Gew.-%, besonders bevorzugt zu mehr als 95 Gew.-% aus Polyurethan besteht, bezogen auf das Gesamtgewicht der Schicht.

Ebenfalls besonders bevorzugt ist es, wenn die Schicht (12), die zumindest teilweise aus einem Elastomer besteht, überwiegend aus Elastomer besteht, insbesondere zu mehr als 50 Gew.-%, bevorzugt zu mehr als 80 Gew.-%, besonders bevorzugt zu mehr als 95 Gew.-% aus Elastomer besteht, insbesondere aus Ethylen-Propylen-Dien-Kautschuk (EPDM), bezogen auf das Gesamtgewicht der Schicht.

In einer bevorzugten Ausgestaltung der vorliegenden Erfindung enthält die Schicht (12) zusätzlich zumindest ein Additiv ausgewählt aus der Gruppe bestehend aus Acrylaten, Methacrylaten, Epoxidharzen, Phenolharzen, Novolaken, Hexamethylentetramin, Hexamethoxymethylmelamin und Guanidine. Diese Additive sind besonders bevorzugt, wenn das Elastomer der Schicht (12) ein Ethylen-Propylen-Dien-Kautschuk (EPDM) ist. Diese Additive sind dazu geeignet, die Festigkeit der Schicht (12) zu verbessern und/oder die Haftung der Schicht (12) an die anderen Schichten zu verbessern.

Gemäß einer bevorzugten Ausgestaltung der vorliegenden Erfindung handelt es sich bei dem mittels Fasern (14) verstärkten Kunststoff um einen mittels UHMW-PE-Fasern (z.B. Dyneema-Fasern) verstärkten Kunststoff, einen Carbonfaserverstärkten Kunststoff (CFK) oder einen Glasfaserverstärkten Kunststoff (GFK), vorzugsweise um einen Glasfaserverstärkten Kunststoff (GFK).

Faserverstärkte Kunststoffe und insbesondere Glasfaserverstärkte Kunststoffe (GFK) zeichnen sich durch hohe mechanische und thermische Stabilität bei einem geringen spezifischen Gewicht aus und sind daher für den Aufbau der Basis eines Rotorblattes oder Rotorblattelementes sehr gut geeignet.

Erfindungsgemäß bevorzugt ist ein Verbundbauteil, bei dem es sich bei dem mittels Fasern (14) verstärkten Kunststoff um ein Kunststoffharzsystem mit einer Epoxidharzmatrix, Polyurethanharzmatrix, Polymetyl(meth)acrylat-Matrix, Poly(meth)acrylat-Matrix oder Poly(meth)acrylamid-Matrix handelt, insbesondere bevorzugt um ein Kunststoffharzsystem mit einer Epoxidharzmatrix.

Erfindungsgemäß bevorzugt ist ein Verbundbauteil, bei dem es sich bei dem mittels Fasern (14) verstärkten Kunststoff um ein Kunststoffharzsystem mit einer Epoxidharzmatrix handelt und die Schicht (13) zusätzlich zumindest ein Additiv ausgewählt aus der Gruppe bestehend aus Acrylaten, Methacrylaten, Phenolharzen und Novolaken enthält.

Ebenfalls bevorzugt ist ein erfindungsgemäßes Verbundbauteil, bei dem es sich bei dem mittels Fasern (14) verstärkten Kunststoff um ein Kunststoffharzsystem mit einer Epoxidharzmatrix handelt, die vor dem Aushärten als Mehrkomponentensystem vorliegt und zumindest eine Komponente, die einen Amin-Härter umfasst, zusätzlich zumindest ein Additiv enthält ausgewählt aus der Liste bestehend aus Hexamethylentetramin, Hexamethoxymethylmelamin und Guanidine.

Darüber hinaus ist es bevorzugt, dass die Schicht (11) und/oder Schicht (12) unabhängig voneinander eine Dicke von 100 bis 5.000 µm aufweist, vorzugsweise eine Dicke von 300 bis 900 µm aufweist, besonders bevorzugt eine Dicke von 400 bis 600 µm aufweist.

Es hat sich in eigenen Untersuchungen gezeigt, dass bei diesen Schichtdicken ein sehr gutes Verhältnis zwischen Verschleiß- und Abriebfestigkeiten und dem Gewicht des Verbundbauteiles vorliegt. Bei einer zu dicken Schicht (11) nimmt das Gewicht des Verbundbauteils zu, ohne dass die Verschleiß- und Abriebfestigkeit wesentlich verbessert werden. Bei einer zu dünnen Schicht (11) nimmt die Verschleiß- und Abriebfestigkeit allerdings ab.

In einer Ausgestaltung der vorliegenden Erfindung ist es bevorzugt, dass der die Schichten (11) und (12) umfassende Laminatverbund auf der Oberfläche, die mit der Schicht (13) im zweiten Arbeitsgang gefügt wird, Einkerbungen aufweist. Durch die Einkerbungen wird die Fläche der Oberfläche erhöht und die Haftung der Schicht (13) an dem Laminatverbund nach dem Fügen im zweiten Arbeitsgang wird erhöht.

Nach dem Zusammenfügen der Schichten (11) und (12) in dem ersten Arbeitsgang zu einem Laminatverbund sind im Falle von Polyurethan die Dialkohole (Diole) beziehungsweise Polyole (z. B. langkettigen Diole) mit den Polyisocyanaten zum Polyurethan abreagiert und die für die Reaktion verwendeten Katalysatoren sind abreagiert oder inaktiv, sofern die Polykondensation chemisch katalysiert verlaufen ist. Im Sinne der vorliegenden Erfindung ist es bevorzugt, wenn der die Schichten (11) und (12) umfassende Laminatverbund weniger als 0,5 pph (parts per hundred/ Anteile des Katalysators pro Hundert Teile Polyurethan) (aktiven) Katalysator enthält, vorzugsweise weniger als 0,2 pph (aktiven) Katalysator, ganz besonders bevorzugt keinen (aktiven) Katalysator enthält.

Nach dem Zusammenfügen der Schichten (11) und (12) in dem ersten Arbeitsgang zu einem Laminatverbund ist im Falle eines Elastomeres dieses vollständig vernetzt bzw. vulkanisiert und die für das Vernetzen bzw. Vulkanisieren verwendeten Vernetzer sind vollständig abreagiert, sofern die Vernetzungsreaktion chemisch induziert verlaufen ist. Im Sinne der vorliegenden Erfindung ist es bevorzugt, wenn der die Schichten (11) und (12) umfassende Laminatverbund weniger als 0,5 pph (parts per hundred/ Anteile des Vernetzers pro Hundert Teile Elastomer) Vernetzer enthält, vorzugsweise weniger als 0,2 pph Vernetzer, ganz besonders bevorzugt keine Vernetzer enthält.

In eigenen Untersuchungen hat es sich als vorteilhaft erwiesen, wenn das Zusammenfügen der Schicht (13) an den die Schichten (11) und (12) umfassende Laminatverbund unter Aushärtung der Schicht (13) erfolgt. In der Praxis wird der zumindest teilweise aus einem mittels Fasern (14) verstärkten Kunststoff nach dem Zusammenfügen mit dem die Schichten (11) und (12) umfassende Laminatverbund ausgehärtet, beispielweise indem kurz vor dem Zusammenfügen ein Härter hinzugegeben wird oder indem der Kunststoff mit Licht bestrahlt wird, sofern es sich um einen lichthärtenden Kunststoff handelt. In einer bevorzugten Ausgestaltung der vorliegenden Erfindung wird die Kunststoffmatrix des mittels Fasern (14) verstärkten Kunststoffes kurz vor dem Zusammenfügen durch Vermischen eines Zweikomponentengemisches hergestellt.

Gemäß einer bevorzugten Ausgestaltung der vorliegenden Erfindung erfolgt das Zusammenfügen der Schicht (13) an den die Schichten (11) und (12) umfassende Laminatverbund unter Wärmeeinwirkung, vorzugweise bei Temperaturen von mindestens 20 °C, vorzugsweise von mindestens 35 °C, weiter bevorzugt von mindestens 55°C, insbesondere bevorzugt von mindestens 75 °C statt, sofern die Schicht (12) Polyurethan enthält.

Gemäß einer bevorzugten Ausgestaltung der vorliegenden Erfindung erfolgt das Zusammenfügen der Schicht (13) an den die Schichten (11) und (12) umfassende Laminatverbund unter Wärmeeinwirkung, vorzugweise bei Temperaturen von maximal 120 °C, vorzugsweise von maximal 110 °C, weiter bevorzugt von maximal 95°C, insbesondere bevorzugt von maximal 85 °C statt, sofern die Schicht (12) Polyurethan enthält. Gemäß einer besonders bevorzugten Ausgestaltung der vorliegenden Erfindung erfolgt das Zusammenfügen der Schicht (13) an den die Schichten (11) und (12) umfassende Laminatverbund unter Wärmeeinwirkung, vorzugweise bei Temperaturen von 20 bis 120 °C, besonders bevorzugt bei Temperaturen von 35 bis 110 °C, weiter bevorzugt bei Temperaturen von 55 bis 95 °C und ganz besonders bevorzugt bei Temperaturen von 75°C bis 85°C, sofern die Schicht Polyurethan enthält.

Gemäß einer alternativen bevorzugten Ausgestaltung der vorliegenden Erfindung erfolgt das Zusammenfügen der Schicht (13) an den die Schichten (11) und (12) umfassende Laminatverbund unter Wärmeeinwirkung, vorzugweise bei Temperaturen von 70 bis 120 °C, besonders bevorzugt bei Temperaturen von 80 bis 115 °C und ganz besonders bevorzugt bei Temperaturen von 105°C bis 115°C, sofern die Schicht (12) ein Elastomer enthält.

Gemäß einer bevorzugten Ausgestaltung der vorliegenden Erfindung ist das Verbundbauteil so ausgestaltet, dass die Schicht (13) zumindest teilweise aus einem Klebstoff besteht und dieser Klebstoff ein Epoxidharz-Klebstoff ist oder diesen umfasst oder ein Polyurethanklebstoff ist oder diesen umfasst. Dabei ist besonders bevorzugt, dass die klebstoffenthaltende Schicht (13) den Laminatverbund mit einer zumindest teilweise aus einem mittels Fasern verstärkten Kunststoff bestehenden Schicht (15) verbindet.

In einer bevorzugten Ausgestaltung der vorliegenden Erfindung ist der Epoxidharz-Klebstoff oder der Polyurethanklebstoff vor dem Aushärten thixotrop eingestellt. Hierdurch kann der Klebstoff vor der Härtung auch Spalten mit mehreren Millimetern Dicke ausfüllen.

Besonders bevorzugt ist es, dass es sich bei der Schicht (15) um einen Faserverstärkten Kunststoff (FVK), einen mittels UHMW-PE-Fasern (z.B. Dyneema-Fasern) verstärkten Kunststoff, einen Carbonfaserverstärkten Kunststoff (CFK) oder einen Glasfaserverstärkten Kunststoff (GFK) handelt, vorzugsweise um einen Glasfaserverstärkten Kunststoff (GFK) handelt.

Darüber hinaus ist es bevorzugt, dass es sich bei der Schicht (15) um ein Kunststoffharzsystem mit einer Epoxidharzmatrix, Polyurethanharzmatrix, Poly(meth)acrylat-Matrix, Polymethyl(meth)acrylat-Matrix oder Poly(meth)acrylamid-Matrix handelt, insbesondere bevorzugt um ein Kunststoffharzsystem mit einer Epoxidharzmatrix handelt.

Bei dieser Ausgestaltung ist es bevorzugt, dass die Schicht (13) eine Dicke von 1 bis 5.000 µm aufweist, vorzugsweise eine Dicke von 5 bis 4.000 µm aufweist, besonders bevorzugt eine Dicke von 10 bis 3.000 µm aufweist.

In dieser Ausgestaltung hat es sich als vorteilhaft erwiesen und ist daher bevorzugt, wenn das Zusammenfügen der Schicht (13) an den die Schichten (11) und (12) umfassenden Laminatverbund unter Aushärtung der klebstoffenthaltenden Schicht (13) erfolgt und die aus mittels Fasern verstärkten Kunststoff bestehende Schicht (15) vollständig ausgehärtet ist. Bei dieser Ausgestaltung der vorliegenden Erfindung ist es möglich, Bauteile, wie beispielsweise Rotorblätter von Windrädern, die erodiert sind und/oder Beschädigungen aufweisen, durch Aufkleben des die Schichten (11) und (12) umfassenden Laminatverbundes zu reparieren und durch hervorragende Verschleiß- und Abriebfestigkeiten von insbesondere Ultra High Molecular Polyethylen (UHMW-PE) einer zukünftigen Erosion und/oder Beschädigung vorzubeugen.

Ein weiterer Aspekt der vorliegenden Erfindung betrifft ein Windrad, umfassend ein erfindungsgemäßes Verbundbauteil. Dabei ist es besonders bevorzugt, dass es sich um ein Windrad einer Windenergieanlage handelt und das erfindungsgemäße Verbundbauteil an zumindest einem Rotorblattelement, insbesondere an zumindest einer Rotorblattkante, vorzugsweise einer Rotorblattvorderkante, angeordnet ist. Besonders bevorzugt ist es, dass das erfindungsgemäße Verbundbauteil an allen Rotorblattkanten, vorzugsweise an allen Rotorblattvorderkanten, einer Windenergieanlage angeordnet ist.

Ein weiterer Aspekt im Zusammenhang mit der vorliegenden Erfindung betrifft eine Verwendung des erfindungsgemäßen Kunststoff-Verbundbauteils in Windrädern, Rotorblättern von Windrädern, Flügeln von Flugzeugen oder Hubschraubern, Tragflächen von Flugzeugen oder Hubschraubern, Rotorblätter von Flugzeugen oder Hubschraubern, Turbinenschaufeln von Triebwerken, Karosseriebauteile von Fahrzeugen, Rumpf- oder Kielbereich von Wasserfahrzeugen oder Nutzflächen von Sportgeräten. Besonders bevorzugt ist die erfindungsgemäße Verwendung in Rotorblattkanten, vorzugsweise an Rotorblattvorderkanten, einer Windenergieanlage.

Das erfindungsgemäße Verbundbauteil kann allerdings auch in anderen Bereichen angewendet werden, in denen eine Erosion der Oberflächen vermieden werden soll. Dies sind erfindungsgemäß beispielsweise:
- Flügel, Tragflächen, Rotorblätter von Flugzeugen oder Hubschraubern,
- Turbinenschaufeln von Triebwerken,
- Karosseriebauteile von Fahrzeugen,
- Rumpf- oder Kielbereich von Wasserfahrzeugen oder
- Nutzflächen von Sportgeräten.

Ein weiterer Aspekt im Zusammenhang mit der vorliegenden Erfindung betrifft ein Verfahren zur Herstellung eines erfindungsgemäßen Verbundbauteiles, umfassend die folgenden Schritte:
- Herstellen oder Bereitstellen eines die Schichten (11) und (12) enthaltenden Laminatverbundes,
- Zusammenfügen des hergestellten oder bereitgestellten Laminatverbundes mit der Schicht (13).

Erfindungsgemäß bevorzugt ist ein Verfahren, bei dem das Polyurethan der Schicht (12) ein thermoplastisches Polyurethan und/oder ein Polyurethan-Elastomer ist und/oder das Elastomer der Schicht (12) ein Ethylen-Propylen-Kautschuk (EPM), Ethylen-Propylen-Dien-Kautschuk(EPDM), Ethylen-Acrylat-Kautschuk (EAM), Fluorkarbon-Kautschuk (FKM), Acrylat-Kautschuk (ACM) oder Acrylnitril-Butadien-Kautschuk (NBR) ist, vorzugsweise ein Ethylen-Propylen-Dien-Kautschuk (EPDM).

Ebenfalls bevorzugt ist ein Verfahren, bei dem das Polyethylen der Schicht (11) ein High Molecular Polyethylen (HMW-PE), ein Ultra High Molecular Polyethylen (UHMW-PE) oder Polytetrafluorethylen (PTFE) ist, vorzugsweise ein Ultra High Molecular Polyethylen (UHMW-PE).

Ganz besonders bevorzugt ist ein Verfahren, bei dem das Elastomer der Schicht (12) ein Polyurethan (vorzugsweise thermoplastisches Polyurethan und/oder Polyurethan-Elastomer) und das Polyethylen der Schicht (11) Ultra High Molecular Polyethylen (UHMW-PE) ist.

Ebenfalls ganz besonders bevorzugt ist ein Verfahren, bei dem das Elastomer der Schicht (12) ein Ethylen-Propylen-Dien-Kautschuk (EPDM) und das Polyethylen der Schicht (11) Ultra High Molecular Polyethylen (UHMW-PE) ist.

Gemäß einer bevorzugten Ausgestaltung des erfindungsgemäßen Verfahrens handelt es sich bei dem mittels Fasern (14) verstärkten Kunststoff der Schicht (13) um mittels UHMW-PE-Fasern (z.B. Dyneema-Fasern) verstärkten Kunststoff, einen Carbonfaserverstärkten Kunststoff (CFK) oder einen Glasfaserverstärkten Kunststoff (GFK), vorzugsweise um einen Glasfaserverstärkten Kunststoff (GFK).

Ganz besonders bevorzugt ist ein Verfahren, bei dem das Polyurethan der Schicht (12) ein thermoplastisches Polyurethan und/oder Polyurethan-Elastomer ist und das Polyethylen der Schicht (11) ein Ultra High Molecular Polyethylen (UHMW-PE) ist und der mittels Fasern (14) verstärkten Kunststoff der Schicht (13) ein Glasfaserverstärkter Kunststoff (GFK) ist.

Ganz besonders bevorzugt ist ein Verfahren, das die folgenden Schritte umfasst:
- Herstellen oder Bereitstellen eines die Schichten (11) und (12) enthaltenden Laminatverbundes,
- Zusammenfügen des hergestellten oder bereitgestellten Laminatverbundes mit einer nicht ausgehärteten Schicht (13) und
- Aushärten der Schicht (13).

Bevorzugt ist ein erfindungsgemäßes Verfahren, bei dem die nicht ausgehärtete Schicht (13) ein Epoxidharz ist, vorzugsweise ein Zweikomponentenepoxidharz ist, das vor dem Zusammenfügen mit dem hergestellten oder bereitgestellten Laminatverbund angemischt wird.

Erfindungsgemäß bevorzugt ist ein Verfahren, bei dem zum Herstellen eines die Schichten (11) und (12) enthaltenden Laminatverbundes die Schicht (11) und/oder Schicht (12) vorbehandelt wurde, vorzugweise durch einen, zwei, drei oder mehrere der Vorbehandlungsverfahren ausgewählt aus der Gruppe umfassend
- spanende Verarbeitung, insbesondere Schleifen,
- chemische Oberflächenbehandlung,
- Behandlung mit Haftvermittlern (Primern) und/oder Beizen,
- thermische Oberflächenbehandlung, insbesondere Plasmaaktivierung, Plasmaoberflächenbehandlung und Gasflammenbehandlung,
- elektrische Oberflächenbehandlung, insbesondere Koronabehandlung,
- Säubern der Oberfläche, vorzugsweise mittels Bürsten, Schleifen und/oder Strahlen,
- Entfernen von Staub-, Fett- und/oder Ölrückständen und
wobei das Vorbehandeln der Schicht (11) und/oder Schicht (12) vorzugsweise auf der Seite der Schicht erfolgt, die beim Herstellen des die Schichten (11) und (12) enthaltenden Laminatverbundes mit der jeweiligen anderen Schicht (12) bzw. (11) verbunden wird.

Erfindungsgemäß bevorzugt ist ein Verfahren, bei dem der die Schichten (11) und (12) enthaltende Laminatverbund nach dem Herstellen oder Bereitstellen und vor dem Zusammenfügen des hergestellten oder bereitgestellten Laminatverbundes mit einer nicht ausgehärteten Schicht (13) vorbehandelt wird, vorzugweise durch einen, zwei, drei oder mehrere der Vorbehandlungsverfahren ausgewählt aus der Gruppe umfassend
- spanende Verarbeitung, insbesondere Schleifen,
- chemische Oberflächenbehandlung,
- Behandlung mit Haftvermittlern (Primern) und/oder Beizen,
- thermische Oberflächenbehandlung, insbesondere Plasmaaktivierung, Plasmaoberflächenbehandlung und Gasflammenbehandlung,
- elektrische Oberflächenbehandlung, insbesondere Koronabehandlung,
- Säubern der Oberfläche, vorzugsweise mittels Bürsten, Schleifen und/oder Strahlen,
- Entfernen von Staub-, Fett- und/oder Ölrückständen und
wobei das Vorbehandeln des die Schichten (11) und (12) enthaltenden Laminatverbund vorzugsweise auf der Schicht (12) erfolgt.

Gemäß einer bevorzugten Ausgestaltung des erfindungsgemäßen Verfahrens erfolgt das Zusammenfügen der Schicht (13) an den die Schichten (11) und (12) umfassende Laminatverbund unter Wärmeeinwirkung, vorzugweise bei Temperaturen von mindestens 20 °C, vorzugsweise von mindestens 35 °C, weiter bevorzugt von mindestens 55 °C, insbesondere bevorzugt von mindestens 75 °C statt.

Gemäß einer bevorzugten Ausgestaltung des erfindungsgemäßen Verfahrens erfolgt das Zusammenfügen der Schicht (13) an den die Schichten (11) und (12) umfassende Laminatverbund unter Wärmeeinwirkung, vorzugweise bei Temperaturen von maximal 120 °C, vorzugsweise von maximal 110 °C, weiter bevorzugt von maximal 95 °C, insbesondere bevorzugt von maximal 85 °C statt.

Gemäß einer bevorzugten Ausgestaltung des erfindungsgemäßen Verfahrens erfolgt das Zusammenfügen der Schicht (13) an den die Schichten (11) und (12) umfassende Laminatverbund unter Wärmeeinwirkung, vorzugweise bei Temperaturen von 20 bis 120 °C, besonders bevorzugt bei Temperaturen von 35 bis 110 °C, weiter bevorzugt bei Temperaturen von 55 bis 95 °C und ganz besonders bevorzugt bei Temperaturen von 75 °C bis 85 °C.

Ein weiterer Aspekt im Zusammenhang mit der vorliegenden Erfindung betrifft ein Verbundbauteil hergestellt durch ein erfindungsgemäßes Verfahren.

Ein weiterer Aspekt im Zusammenhang mit der vorliegenden Erfindung betrifft ein Verfahren zum Reparieren und/oder Ausbessern eines Rotorblattelementes (im Sinne dieser Anmeldung ebenfalls ein Herstell-Verfahren, siehe oben), vorzugsweise eines Rotorblattelementes einer Windenergieanlage mit einem erfindungsgemäßen Verbundbauteil, umfassend die folgenden Schritte:
- Vorbereiten des beschädigten Rotorblattelementes,
- Herstellen oder Bereitstellen eines die Schichten (11) und (12) enthaltenden Laminatverbundes,
- Auftragen einer nicht ausgehärteten Schicht (13) auf das vorbereitete Rotorblattelement und/oder auf den hergestellten oder bereitgestellten die Schichten (11) und (12) enthaltenden Laminatverbund,
- Zusammenfügen des hergestellten oder bereitgestellten Laminatverbundes mit dem Rotorblattelement, wobei sich die nicht ausgehärtete Schicht (13) zwischen dem Rotorblattelement und der Schicht (12) des Laminatverbundes befindet und
- Aushärten der Schicht (13).

Bevorzugt ist ein erfindungsgemäßes Verfahren, bei dem das Vorbereiten des beschädigten Rotorblattelementes zumindest einen der nachfolgenden Schritte umfasst:
- spanende Verarbeitung, insbesondere Schleifen,
- chemische Oberflächenbehandlung,
- Behandlung mit Haftvermittlern (Primern) und/oder Beizen,
- thermische Oberflächenbehandlung, insbesondere Plasmaaktivierung, Plasmaoberflächenbehandlung und Gasflammenbehandlung,
- elektrische Oberflächenbehandlung, insbesondere Koronabehandlung,
- Säubern der Oberfläche, vorzugsweise mittels Bürsten, Schleifen und/oder Strahlen,
- Entfernen von Staub-, Fett- und/oder Ölrückständen.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.
Fig. 1 zeigt eine schematische Darstellung einer Windenergieanlage mit Rotorblattelement gemäß der Erfindung;
Fig. 2 zeigt schematisch eine Ausführungsform eines Rotorblattelementes gemäß der Erfindung;
Fig. 3 zeigt in schematischer Darstellung einen Ausschnitt des Rotorblattelementes aus Fig. 2;
Fig. 4 zeigt in schematischer Darstellung einen alternativen Ausschnitt des Rotorblattelementes.

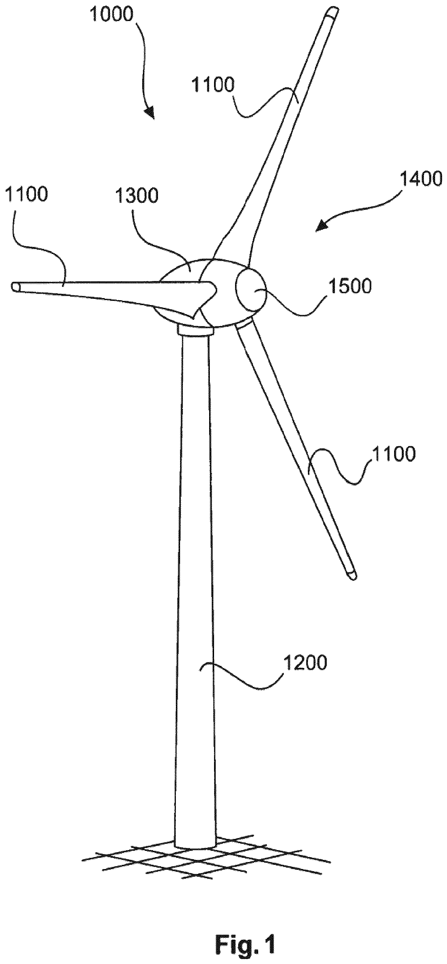

Fig. 1 zeigt eine Windenergieanlage 1000 mit einem Turm 1200 und einer Gondel 1300. An der Gondel 1300 ist ein Rotor 1400 mit drei Rotorblättern 1100 und einem Spinner 1500 angeordnet. Der Rotor 1400 wird im Betrieb durch den Wind in eine Drehbewegung versetzt und treibt dadurch einen Generator in der Gondel 1300 an. Die Rotorblätter 1100 der Windenergieanlage 1000 verfügen über eine Basis (Schicht 13) aus einem zumindest teilweise mittels Fasern verstärkten Kunststoff und sind stellenweise mit einer Oberflächenfolie (Schicht 11) aus Polyethylen beschichtet, wobei sich zwischen der Oberflächenfolie und der Basis eine Polyurethan-Schicht beziehungsweise Elastomer-Schicht (Schicht 12) befindet. Dieser Aufbau wird anhand der folgenden Figuren näher erläutert.

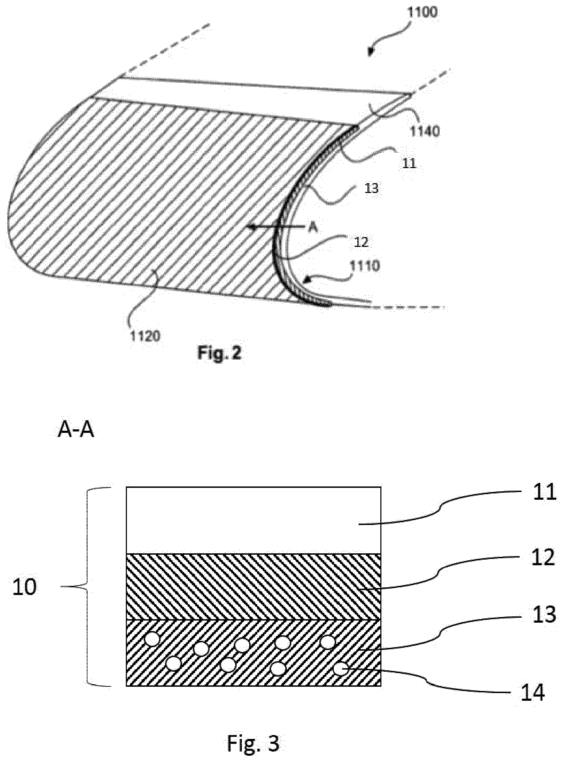

Fig. 2 zeigt eine Rotorblattelement 1110 des Rotorblattes 1100, nämlich die Rotorblattnase. Die Rotorblattnase 1110 verfügt über eine Oberflächenfolie 11. Diese besteht in diesem Ausführungsbeispiel aus Polyethylen mit ultrahohem Molekulargewicht (UHMW-PE). Die Oberflächenfolie 11 (Schicht 11) ist über eine Anbindungsschicht 12 (Schicht 12) mit der Basis des Rotorblattelementes 13 (Schicht 13) verbunden. Die Basis 13 (Schicht 13) des Rotorblattelementes besteht dabei zumindest teilweise aus einem mittels Fasern (14) verstärkten Kunststoff. Im Ausführungsbeispiel ist das Fasermaterial glasfaserverstärkter Kunststoff (GFK) und das härtbare Harz ein Epoxidharz. Die Anbindungsschicht 12 (Schicht 12) besteht zumindest teilweise aus einem Polyurethan und/oder einem Elastomer. Durch die Anbindung der Oberflächenfolie 11 (Schicht 11) an die Basis 13 (Schicht 13) mittels einer elastischen Anbindungsschicht ist das Fügen von UHMW-PE auf Epoxidharz möglich. Die Oberflächenfolie 11 (Schicht 11) aus UHMW-PE ist besonders widerstandsfähig gegen abrasive Belastungen wie sie beim Betrieb von Windenergieanlagen insbesondere an den Rotorkanten auftritt.

Fig. 3 zeigt einen Ausschnitt des Rotorblattelementes 1110. An dieser Stelle des Rotorblattelementes 1110 verfügt das Rotorblattelement 1110 über folgenden Schichtaufbau: Eine erste Schicht (11), die zumindest teilweise aus Polyethylen besteht, eine Schicht (12), die zumindest teilweise aus einem Polyurethan und/oder einem Elastomer besteht, und wenigstens eine Schicht (13) als Basis, die zumindest teilweise aus einem mittels Fasern (14) verstärkten Kunststoff besteht. In diesem Ausführungsbeispiel ist das Fasermaterial glasfaserverstärkter Kunststoff (GFK) und das härtbare Harz ein Epoxidharz, das Polyethylen ist ein Polyethylen mit ultrahohem Molekulargewicht (UHMW-PE) und das Polyurethan ist ein thermoplastischen Polyurethan-Elastomer oder das Elastomer ist ein Ethylen-Propylen-Dien-Kautschuk (EPDM).

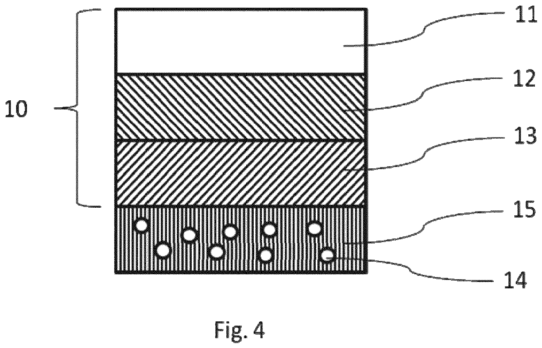

Fig. 4 zeigt einen alternativen Ausschnitt des Rotorblattelementes 1110. An dieser Stelle des Rotorblattelementes 1110 verfügt das Rotorblattelement 1110 über folgenden Schichtaufbau: Eine erste Schicht (11), die zumindest teilweise aus Polyethylen besteht, eine Schicht (12), die zumindest teilweise aus einem Polyurethan besteht und/oder einem Elastomer, wenigstens eine Schicht (13), die zumindest teilweise aus einem Klebstoff besteht und eine Schicht (15), die zumindest teilweise aus einem mittels Fasern (14) verstärkten Kunststoff besteht. In diesem Ausführungsbeispiel ist das Fasermaterial glasfaserverstärkter Kunststoff (GFK) und das härtbare Harz ein Epoxidharz, das Polyethylen ist ein Polyethylen mit ultrahohem Molekulargewicht (UHMW-PE), das Polyurethan kann ein thermoplastisches Polyurethan-Elastomer, ein thermoplastisches Polyurethan oder ein Polyurethan-Elastomer sein oder das Elastomer ist ein Ethylen-Propylen-Dien-Kautschuk (EPDM) und der Klebstoff ist jeweils ein Epoxidharz-Klebstoff.

## Patentansprüche

1. Verbundbauteil (10), **gekennzeichnet durch** folgenden Schichtenaufbau
a) eine Schicht (11), die zumindest teilweise aus Polyethylen besteht,
b) eine Schicht (12), die zumindest teilweise aus einem Polyurethan und oder einem Elastomer besteht,
c) wenigstens eine Schicht (13), die zumindest teilweise aus einem mittels Fasern (14) verstärkten Kunststoff besteht, oder die zumindest teilweise aus einem Klebstoff besteht, wobei die Schicht (13) ein Epoxidharz-Klebstoff ist oder diesen umfasst oder ein Polyurethan-Klebstoff ist oder diesen umfasst,
wobei die Schicht (12) unmittelbar zwischen der Schicht (11) und der Schicht (13) angeordnet ist,
wobei die Schichten (11) und (12) in einem ersten Arbeitsgang zu einem Laminatverbund gefügt wurden und die Schicht (13) in einem zweiten Arbeitsgang an den die Schichten (11) und (12) umfassenden Laminatverbund gefügt wurden.

2. Verbundbauteil nach Anspruch 1, **dadurch gekennzeichnet, dass** das Polyethylen ein High Molecular Polyethylen (HMW-PE), ein Ultra High Molecular Polyethylen (UHMW-PE) oder Polytetrafluorethylen (PTFE) ist, vorzugsweise ein Ultra High Molecular Polyethylen (UHMW-PE) ist.

3. Verbundbauteil nach einem der vorherigen Ansprüche, **dadurch gekennzeichnet, dass** das Polyurethan ein thermoplastischen Polyurethan und/oder ein Polyurethan-Elastomer ist, **dadurch gekennzeichnet, dass** das Elastomer ein Ethylen-Propylen-Kautschuk (EPM), Ethylen-Propylen-Dien-Kautschuk(EPDM), Ethylen-Acrylat-Kautschuk (EAM), Fluorkarbon-Kautschuk (FKM), Acrylat-Kautschuk (ACM) oder Acrylnitril-Butadien-Kautschuk (NBR) ist, vorzugsweise ein Ethylen-Propylen-Dien-Kautschuk(EPDM) ist.

4. Verbundbauteil nach einem der vorherigen Ansprüche, **dadurch gekennzeichnet, dass** es sich bei der mittels Fasern (14) verstärkten Kunststoff um einen mittels UHMW-PE-Fasern verstärkten Kunststoff, einen Carbonfaserverstärkten Kunststoff (CFK) oder einen Glasfaserverstärkten Kunststoff (GFK) handelt, vorzugsweise um einen Glasfaserverstärkten Kunststoff (GFK) handelt.

5. Verbundbauteil nach einem der vorherigen Ansprüche, **dadurch gekennzeichnet, dass** es sich bei dem mittels Fasern (14) verstärkten Kunststoff um ein Kunststoffharzsystem auf Epoxid-Basis, Polyurethan-Basis, Poly(meth)acrylat-Matrix, Polymethyl(meth)acrylat-Matrix oder Poly(meth)acrylamid-Matrix handelt.

6. Verbundbauteil nach einem der vorherigen Ansprüche, **dadurch gekennzeichnet, dass** das Zusammenfügen der Schicht (13) mit dem die Schichten (11) und (12) umfassenden Laminatverbund unter Aushärtung der Schicht (13) erfolgt.

7. Verbundbauteil nach einem der vorherigen Ansprüche, **dadurch gekennzeichnet, dass** es sich bei dem Verbundbauteil um ein Rotorblatt handelt, vorzugsweise um ein Rotorblatt eines Windrades.

8. Windrad umfassend ein Verbundbauteil nach einem der Ansprüche 1 bis 7.

9. Verfahren zur Herstellung eines Verbundbauteiles nach einem der Ansprüche 1 bis 7, umfassend die folgenden Schritte:
- Herstellen oder Bereitstellen eines die Schichten (11) und (12) enthaltenden Laminatverbundes,
- Zusammenfügen des hergestellten oder bereitgestellten Laminatverbundes mit der Schicht (13).

## Claims

1. Composite component (10) **characterized by** the following layer construction:
a) a layer (11) which consists at least partly of polyethylene,
b) a layer (12) which consists at least partly of a polyurethane and/or an elastomer,
c) at least one layer (13) which consists at least partly of a plastic reinforced by fibres (14), or which consists at least partly of an adhesive, wherein the layer (13) is or comprises an epoxy resin adhesive or is or comprises a polyurethane adhesive,
wherein the layer (12) is disposed directly between the layer (11) and the layer (13),
wherein the layers (11) and (12) have been joined in a first operation to form a laminate composite and the layer (13) has been joined in a second operation onto the laminate composite comprising the layers (11) and (12).

2. Composite component according to Claim 1, **characterized in that** the polyethylene is a high molecular polyethylene (HMW-PE), an ultrahigh molecular polyethylene (UHMW-PE) or polytetrafluoroethylene (PTFE), preferably an ultrahigh molecular polyethylene (UHMW-PE).

3. Composite component according to either of the preceding claims, **characterized in that** the polyurethane is a thermoplastic polyurethane and/or a polyurethane elastomer, **characterized in that** the elastomer is an ethylene-propylene rubber (EPM), ethylene-propylene-diene rubber (EPDM), ethylene-acrylate rubber (EAM), fluorocarbon rubber (FKM), acrylate rubber (ACM) or acrylonitrile-butadiene rubber (NBR), preferably an ethylene-propylene-diene rubber (EPDM).

4. Composite component according to any of the preceding claims, **characterized in that** the plastic reinforced by fibres (14) is a plastic reinforced by UHMW-PE fibres, a carbon fibre reinforced plastic (CRP) or a glass fibre reinforced plastic (GRP), preferably a glass fibre reinforced plastic (GRP).

5. Composite component according to any of the preceding claims, **characterized in that** the plastic reinforced by fibres (14) is a plastic resin system based on epoxide, based on polyurethane, poly(meth)acrylate matrix, polymethyl (meth)acrylate matrix or poly(meth)acrylamide matrix.

6. Composite component according to any of the preceding claims, **characterized in that** the assembling of the layer (13) with the laminate composite comprising the layers (11) and (12) takes place with curing of the layer (13).

7. Composite component according to any of the preceding claims, **characterized in that** the composite component is a rotor blade, preferably a rotor blade of a wind turbine.

8. Wind turbine comprising a composite component according to any of Claims 1 to 7.

9. Method for producing a composite component according to any of Claims 1 to 7, comprising the following steps:
- producing or providing a laminate composite comprising the layers (11) and (12),
- assembling the laminate composite, produced or provided, with the layer (13).

## Revendications

1. Elément composite (10), **caractérisé par** une structure stratifiée suivante
a) une couche (11), qui est constituée au moins en partie de polyéthylène,
b) une couche (12), qui est constituée au moins en partie d'un polyuréthane ou d'un élastomère,
c) au moins une couche (13), qui est constituée au moins en partie d'une matière plastique renforcée au moyen de fibres (14), ou qui est constituée au moins en partie d'une colle, dans lequel la couche (13) est une colle de résine époxy ou comprend celle-ci ou est une colle de polyuréthane ou comprend celle-ci,
dans lequel la couche (12) est disposée directement entre la couche (11) et la couche (13),
dans lequel les couches (11) et (12) ont été assemblées lors d'un premier cycle d'opérations en un composite stratifié et la couche (13) a été assemblée lors d'un deuxième cycle d'opérations au niveau du composite stratifié comprenant les couches (11) et (12).

2. Elément composite selon la revendication 1, **caractérisé en ce que** le polyéthylène est un polyéthylène à poids moléculaire élevé (HMW-PE), un polyéthylène à poids moléculaire ultra-élevé (UHMW-PE) ou un polytétrafluoroéthylène (PTFE), de préférence un polyéthylène à poids moléculaire ultra-élevé (UHMW-PE).

3. Elément composite selon l'une quelconque des revendications précédentes, **caractérisé en ce que** le polyuréthane est un polyuréthane thermoplastique et/ou un élastomère polyuréthane, **caractérisé en ce que** l'élastomère est un caoutchouc d'éthylène-propylène (EPM), un caoutchouc d'éthylène-propylène-diène (EPDM), un caoutchouc d'éthylène-acrylate (EAM), un caoutchouc de fluorocarbone (FKM), un caoutchouc d'acrylate (ACM) ou un caoutchouc acrylonitrile-butadiène (NBR), de préférence un caoutchouc d'éthylène-propylène-diène (EPDM).

4. Elément composite selon l'une quelconque des revendications précédentes, **caractérisé en ce que** la matière plastique renforcée au moyen de fibres (14) est une matière plastique renforcée au moyen de fibres de UHMW-PE, une matière plastique renforcée par des fibres de carbone (CFK) ou une matière plastique renforcée par des fibres de verre (GFK), de préférence une matière plastique renforcée par des fibres de verre (GFK).

5. Elément composite selon l'une quelconque des revendications précédentes, **caractérisé en ce que** la matière plastique renforcée au moyen de fibres (14) est un système de matière plastique-résine à base d'époxyde, à base de polyuréthane, une matrice de poly(méth)acrylate, une matrice de polyméthyl(méth)acrylate ou une matrice de poly(méth)acrylamide.

6. Elément composite selon l'une quelconque des revendications précédentes, **caractérisé en ce que** le regroupement de la couche (13) et du composite stratifié comprenant les couches (11) et (12) est effectué en durcissant la couche (13).

7. Elément composite selon l'une quelconque des revendications précédentes, **caractérisé en ce que** l'élément composite est une pale de rotor, de préférence une pale de rotor d'une éolienne.

8. Eolienne comprenant un élément composite selon l'une quelconque des revendications 1 à 7.

9. Procédé servant à fabriquer un élément composite selon l'une quelconque des revendications 1 à 7, comprenant les étapes suivantes :
- fabrication ou mise à disposition d'un composite stratifié contenant les couches (11) et (12) ;
- regroupement du composite stratifié fabriqué ou mis à disposition et de la couche (13).
